# EUROPEAN PATENT APPLICATION

(11) **EP 3 719 886 A1**
(43) Date of publication of application: **07.10.2020**
(21) Application number: 17925532.8
(22) Date of filing: 29.11.2017
(51) Int. Cl.: H01M 4/525, H01M 10/052

(54) **LITHIUM ION BATTERY CATHODE MATERIAL, PREPARATION METHOD THEREFOR, AND LITHIUM ION BATTERY**

(71) Applicant: XTC New Energy Materials(xiamen) Ltd., Xiamen, Fujian 361026 (CN)
(72) Inventor: ZENG, Leiying, Xiamen Fujian 361026 (CN); ZHANG, Jian, Xiamen Fujian 361026 (CN); YAN, Zeyu, Xiamen Fujian 361026 (CN)
(74) Representative: Zaboliene, Reda
(86) International application number: PCT/CN2017/113630
(87) International publication number: WO 2019/104544

(57) **Abstract**

An anode material used for a lithium-ion battery, a method for making the anode material, and a lithium-ion battery are provided. The anode material includes particles in dense layer, then inner layer, and then particle core. The dense layer is evenly enriched with an M element and an A element. Concentrations of the M element and the A element progressively decreasing in the inner layer along a direction from the dense layer to the particle core. The particle core includes the M element and the A element at a concentration greater than zero and having an average distribution. The M element comprises one or more metallic elements having doping and coating functions. The A element comprises one or more nonmetallic elements having doping and coating functions. The M element includes Al, or Al and at least one of Mg, Ti, Zr, Mn. The A element includes F, or F and at least one of B, P, and N.

## Description

### FIELD OF THE INVENTION

The disclosure relates to lithium-ion batteries manufacturing, and more particularly, to an anode material for a lithium-ion battery, a method for making the same, and a lithium-ion battery.

### BACKGROUND

Lithium-ion batteries have high operation voltage, high energy density, long cycling life, light weight, low self-discharge, extremely small memory effect, and high cost performance. The lithium-ion batteries are widely used in various fields including portable devices and electric vehicles, and are becoming the most competitive power batteries. The anode material plays a key role in the performance of the lithium-ion battery, which determines the performance of the lithium-ion battery. However, the anode material can also become a bottleneck which limits the energy density, the power density, the cycling life, the safety of the lithium-ion battery. Thus, it is a hotspot for one ordinary skill in the art to improve the performance of the anode material.

Most commercial lithium cobalt oxide anode material has a low capacity of about 140 mAh/g. Although the lithium cobalt oxide anode material can have a theoretical capacity of about 274 mAh/g, a voltage greater than 4.5V is necessary to utilize such capacity. A high voltage may cause an irreversible damage to the structure of the lithium-ion battery and cause serious side reactions, which also decrease the cycling stability, the rate capability, and the thermal stability of the lithium-ion battery.

### SUMMARY OF THE INVENTION

In view of the above, an objective of the present disclosure is to provide an anode material for a lithium-ion battery that can have structural stabilities and high energy density under a high voltage, a method for making the anode material, and a lithium-ion battery having the anode material.

According to an embodiment, the present disclosure provides an anode material adapted for a lithium-ion battery, comprising particles each comprising a dense layer, an inner layer, and a particle core. Wherein the dense layer is evenly enriched with an M element and an A element. The inner layer comprises the M element and the A element, concentrations of the M element and the A element progressively decreasing in the inner layer along a direction from the dense layer to the particle core. The particle core comprises the M element and the A element, concentrations of the M element and the A element being greater than zero and evenly distributed in the particle core. The M element comprises one or more metallic elements having doping and coating functions. The A element comprises one or more nonmetallic elements having doping and coating functions. The M element comprises Al, or Al and at least one of Mg, Ti, Zr, Mn, and Ni.

The A element comprises F, or F and at least one of B, P, and N.

The present disclosure further provides an anode material adapted for a lithium-ion battery, comprising particles each having a dense layer, an inner layer, and a particle core. Wherein the dense layer ranges from an outer surface of the particle to the inner layer. The dense layer is enriched with an M element and an A element, concentrations of the M element and the A element being progressively decreasing from the outer surface of the particle to the particle core. The particle core comprises the M element and the A element, concentrations of the M element and the A element being greater than zero and being evenly distributed in the particle core. The M element comprises one or more metallic elements having doping and coating functions. The A element comprises one or more nonmetallic elements having doping and coating functions. The particles of the anode material have non-uniform particle sizes, a concentration of the M element in the dense layer of small particles is higher than that in the dense layer of the large particles.

The M element comprises Al, or Al and at least one of Mg, Ti, Zr, Mn, and Ni.

The A element comprises F, or F and at least one of B, P, and N.

The present disclosure further provides a method for making the anode material for a lithium-ion battery, comprising:
primary mixing: mixing a cobalt salt undoped or doped with an M' element and a lithium compound to form a primary mixture, or further adding a nano-scale additive comprising an M" element into the primary mixture, a mole ratio between the lithium element and the cobalt element in the primary mixture being between 1 and 1.06, the cobalt salt having a medium diameter of 13 microns to 16 microns, the M' element comprising Al, or Al and at least one of Mg, Ti, Zr, Mn, and Ni, the M' element comprising Al, or Al and at least one of Mg, Ti, Zr, Mn, and Ni;
primary sintering: forming primary sintered particles by sintering the primary mixture, the sintering comprises heating the primary mixture to a temperature ranging from 700 degrees Celsius to 900 degrees Celsius, and sintering the primary mixture at the temperature for a first time period H₁, and further comprising heating the primary mixture to a temperature ranging from 900 degrees Celsius to 1100 degrees Celsius, and sintering the primary mixture at the temperature for a second time period H₂, a sum of H₁ and H₂ being 8 hours to 20 hours;
crushing and separating: crushing and separating the primary sintered particles into intermediate particles having non-uniform particle sizes;
secondary mixing: mixing the intermediate particles having non-uniform particle sizes, a nano-scale additive comprising an M element, and a nano-scale additive comprising an A element to form a secondary mixture, wherein the M element comprises Al, or Al and at least one of Mg, Ti, Zr, Mn, and Ni, the M' element and the M" element comprised in the M element; the A element comprises F, or F and at least one of B, P, and N;
secondary sintering: forming secondary sintered particles by sintering the secondary mixture at a temperature from 600 degrees Celsius to 1100 degrees Celsius for a time period H₃ from 5 hours to 20 hours; and
milling: cooling and milling the secondary sintered particles to form the anode material.

The present disclosure further provides a lithium-ion battery, comprising an electrode plate, a lithium plate, and an electrolyte. The electrode plate comprises the anode material, a binding agent, and an electrical conductive agent. Wherein the lithium-ion battery has a capacity retention ratio greater than 80% after 50 cycles under a voltage of 4.6 V.

The anode material of the present disclosure has an excellent electrochemical performance through surface modification. The anode material has a higher specific capacity and also a more stable structure by coating positive and negative ions on the surface. Thus, it can overcome the shortcomings of the existing anode material, especially the lithium cobaltate anode material, in capacity and stabilities.

### BRIEF DESCRIPTION OF THE DRAWINGS

Implementations of the disclosure will now be described, by way of embodiments only, with reference to the attached figures to better illustrate details and features of the present disclosure.
FIG. 1 is an SEM image of an anode material for lithium-ion battery of Embodiment 1.
FIG. 2 is an SEM image of an anode material of Embodiment 2.
FIG. 3 is an SEM image of an anode material of Embodiment 3.
FIG. 4 is an SEM image of an anode material of Embodiment 4.
FIG. 5 is a graph illustrating an EPMA result of the anode material of Embodiment 3, including content image (a) of fluorine, content image (b) of aluminum, and COMP image (c) of the anode material.
FIG. 6 is a graph illustrating an EPMA result of the anode material of Comparative Embodiment 3, including content image (a) of fluorine, content image (b) of aluminum, and COMP image (c) of the anode material.
FIG. 7 is a graph illustrating an EPMA result of the anode material of Comparative Embodiment 4, including content image (a) of fluorine and COMP image (b) of the anode material.
FIG. 8 is a graph illustrating a capacity retention ratio of a lithium-ion battery using the anode material of Embodiment 5.

### DETAILED DESCRIPTION OF THE INVENTION

Numerous specific details are set forth in order to provide a thorough understanding of the embodiments described herein. However, the description is exemplarily described with reference to the figures, and is not to be considered as limiting the scope of the embodiments described herein.

It should be understood that the terms "first", "second", "third", and "fourth" are used for descriptive purposes, and are not to be interpreted as indicating or implying relative importance or the quantity of the technical features. Thus, the features defined by the terms "first", "second", "third", and "fourth" may explicitly or implicitly include one or more of the features. Further, in the present disclosure, the term "a plurality of" means two or more unless otherwise specified.

The present disclosure provides an embodiment of an anode material for a lithium-ion battery. The anode material includes particles each having a dense layer, an inner layer, and a particle core. The dense layer is evenly enriched with an M element and an A element. The inner layer includes the M element and the A element, and concentrations of the M element and the A element progressively decreasing in the inner layer along a direction from the dense layer to the particle core. The particle core includes the M element and the A element, and concentrations of the M element and the A element being greater than zero and evenly distributed in the particle core. The M element includes one or more metallic elements having doping and coating functions. The A element includes one or more nonmetallic elements having doping and coating functions. The M element includes Al, or Al and at least one of Mg, Ti, Zr, Mn, and Ni.

The A element includes F, or F and at least one of B, P, and N. The dense layer ranges from the outer surface of the particle to the inner layer.

When the M element includes only one element, the M element is Al. When the M element includes Al and other element(s), the other element(s) can be at least one of Mg, Ti, Zr, Mn, and Ni.

When the A element includes only one element, the A element is F. When the A element includes F and other element(s), the other element(s) can be at least one of B, P, and N.

The present disclosure modifies the surface of the anode material. Based on Electron probe Micro-analyzer (EPMA) result of the anode material for the lithium cobaltate battery, the concentrations of the metallic ions (also positive ions) and the nonmetallic ions (also positive ions) progressively decrease in the inner layer or both in the dense layer and the inner layer. The formation of the dense layer has a close relationship with the coating and doping of the metallic ions and the nonmetallic ions to the anode material.

In an embodiment, the anode material has a general formula of Li_{1+z}Co₁₋ₓMxOₘAₙ. Wherein, 0<z≤0.05, 0<x≤0.03, 1.9≤m+n≤2.1, m and n are not zero.

In an embodiment, the particles of the anode material have a uniform particle size or non-uniform particle sizes. When the particles of the anode material have non-uniform particle sizes, a concentration of the M element in the dense layer of the small particles is higher than that in the dense layer of the large particles.

In an embodiment, the small particles have a medium diameter of 2 microns to 8 microns. The large particles have a medium diameter of 13 microns to 22 microns.

In an embodiment, when the M element is Al, the M element has a concentration of 500 ppm to 12000 ppm. When the A element is F, the A element has a concentration of 200 ppm to 2000 ppm.

In an embodiment, when the M element includes Al and other element(s), Al has a concentration of 500 ppm to 12000 ppm, and the M element has a total concentration of 1000 ppm to 30000 ppm. When the A element includes F and other element(s), F has a concentration of 200 ppm to 2000 ppm, and the A element has a total concentration of 200 ppm to 4000 ppm.

The present disclosure further provides another embodiment of an anode material for a lithium-ion battery. The anode material includes particles each having a dense layer, an inner layer, and a particle core. The dense layer ranges from the outer surface of the particle to the inner layer. The dense layer is enriched with M element and A element. The concentrations of the M element and the A element progressively decrease from the outer surface of the particle to the particle core. The particle core includes the M element and the A element, and the concentrations of the M element and the A element being greater than zero and evenly distributed in the particle core. The M element includes one or more metallic elements having functions of doping and coating. The A element includes one or more nonmetallic elements having functions of doping and coating. Particle sizes of the particles of the anode material may be uniform or non-uniform. When the anode material comprises the particle having non-uniform particle sizes, the concentration of the M element of the small particles is higher than that of the large particles.

The M element includes Al, or Al and at least one of Mg, Ti, Zr, Mn, and Ni.

The A element includes F, or F and at least one of B, P, and N.

When the M element includes only one element, the M element is Al. When the M element includes Al and other element(s), the other element(s) can be at least one of Mg, Ti, Zr, Mn, and Ni.

When the A element includes only one element, the A element is F. When the A element includes F and other element(s), the other element(s) can be at least one of B, P, and N.

In this embodiment, the anode material has a general formula of Li_{1+z}Co₁₋ₓMxOₘAₙ. Wherein, 0<z≤0.05, 0<x≤0.03, 1.9≤m+n≤2.1, m and n are not zero.

In this embodiment, the small particles have a medium diameter of 2 microns to 8 microns. The large particles have a medium diameter of 13 microns to 22 microns.

In this embodiment, the large particles and the small particles are in a ratio between 7:3 and 9:1 by weight.

In this embodiment, when the M element is Al, the M element has a concentration of 500 ppm to 12000 ppm. When the A element is F, the A element has a concentration of 200 ppm to 2000 ppm.

Furthermore, when the M element includes Al and other element(s), Al has a concentration of 500 ppm to 12000 ppm, and the M element has a total concentration of 1000 ppm to 30000 ppm. When the A element includes F and other element(s), F has a concentration of 200 ppm to 2000 ppm, and the A element has a total concentration of 200 ppm to 4000 ppm.

In an embodiment, the particles of the anode material include primary particles and secondary particles formed by the primary particles.

The present disclosure further provides an embodiment of a method for making the anode material for the lithium-ion battery. The method includes following steps.

At step S1, primary mixing step: a cobalt salt undoped or doped with an M' element, and a lithium compound are mixed to form a primary mixture. A nano-scale additive including an M" element can further be added into the primary mixture. The Li/Co is in a mole ratio between 1:1 and 1.06:1. The cobalt salt has a medium diameter (D50) of 13 microns to 16 microns. The M' element includes Al, or Al and at least one of Mg, Ti, Zr, Mn, and Ni. The M' element includes Al, or Al and at least one of Mg, Ti, Zr, Mn, and Ni.

At step S2, primary sintering step: the primary mixture is sintered to form primary sintered particles. The sintering comprises heating the primary mixture to a first temperature ranging from 700 degrees Celsius to 900 degrees Celsius, and sintering the primary mixture at the temperature for a time period H₁, and further comprises heating the primary mixture from the temperature to a temperature ranging from 900 degrees Celsius to 1100 degrees Celsius, and sintering the primary mixture at the temperature for a time period H₂. A sum of H₁ and H₂ is 8 hours to 20 hours.

At step S3, crushing and separating: the primary sintered particles are crushed and separated into intermediate particles having non-uniform particle sizes.

At step S4, secondary mixing: the intermediate particles having non-uniform particle sizes are mixed, and a nano-scale additive including an M element, and a nano-scale additive including an A element are further added to form secondary mixture. The M element includes Al, or Al and at least one of Mg, Ti, Zr, Mn, and Ni. The M' element and the M" element are included in the M element. The A element includes F, or F and at least one of B, P, and N.

At step S5, secondary sintering: the secondary mixture is sintered at a temperature from 600 degrees Celsius to 1100 degrees Celsius for a time period H₃ from 5 hours to 20 hours, to form secondary sintered particles.

At block S6, milling: the secondary sintered particles are cooled and milled to form the anode material.

In an embodiment, during the primary mixing step, the amounts of the cobalt salt, the lithium compound, and the nano-scale additive including the M" element causes the anode material to have a general formula of Li_{1+z}Co₁₋ₓMxOₘAₙ. Wherein, 0<z≤0.05, 0<x≤0.03, 1.9≤m+n≤2.1, m and n are not zero.

In an embodiment, during the secondary mixing, the amounts of the large intermediate particles, the small intermediate particles, the nano-scale additive including the M element, and the nano-scale additive including the A element causes the anode material to have a general formula of Li_{1+z}Co₁₋ₓMxOₘAₙ. Wherein, 0<z≤0.05, 0<x≤0.03, 1.9<m+n<2.1, m and n are not zero.

In an embodiment, the cobalt salt includes cobaltosic oxide. The lithium compound includes lithium carbonate.

In an embodiment, the nano-scale additive including the M" element includes one or more compounds, and the one or more compounds include at least one of oxide, fluoride, and carbonic acid compound.

In an embodiment, during the secondary mixing, the intermediate particles having non-uniform particle sizes are separated into large intermediate particles and small intermediate particles, and the large intermediate particles and the small intermediate particles are in a ratio between 7:3 and 9:1 by weight.

In an embodiment, the nano-scale additive including the A element includes at least one of LiF, AlF₃, and MgF₂.

In this embodiment, the method is implemented to making the lithium-ion battery. The method includes following steps.
1. Step of making lithium cobaltate large intermediate particles: a cobalt salt undoped or doped with an M' element, and a lithium compound are mixed. A nano-scale additive including an M" element can further be added. The mixture is sintered, crushed, and separated to form the lithium cobaltate large intermediate particles. The M' element includes Al, or Al and at least one of Mg, Ti, Zr, Mn, and Ni. The M' element includes Al, or Al and at least one of Mg, Ti, Zr, Mn, and Ni.
   The lithium cobaltate large intermediate particles is sintered by a first sintering process and a second sintering process. The temperature of the first sintering process ranges from 700 degrees Celsius to 900 degrees Celsius. The temperature of the second sintering process ranges from 900 degrees Celsius to 1100 degrees Celsius. A sum of the time periods for the sintering is 8 hours to 20 hours. After crushed and separated, the lithium cobaltate large intermediate particles have a medium diameter of 13 microns to 22 microns. The lithium cobaltate large intermediate particles include primary particles and secondary particles formed by the primary particles.
2. Step of making lithium cobaltate small intermediate particles: a cobalt salt undoped or doped with the M' element, and a lithium compound are mixed. A first nano-scale additive including the M" element can further be added. The primary mixture is sintered, crushed, and separated to form the lithium cobaltate small intermediate particles.
   The lithium cobaltate small intermediate particles is sintered by a first sintering process and a second sintering process. The temperature of the first sintering process ranges from 700 degrees Celsius to 900 degrees Celsius. The temperature of the second sintering process ranges from 900 degrees Celsius to 1000 degrees Celsius. A sum of the time periods for the sintering is 8 hours to 20 hours. After crushed and separated, the lithium cobaltate small intermediate particles have a medium diameter of 2 microns to 8 microns. The lithium cobaltate small intermediate particles include primary particles and secondary particles formed by the primary particles. The secondary mixture is sintered,
3. Step of making anode material for the lithium-ion battery: a nano-scale additive including an M element, a nano-scale additive including an A element, and at least one of the lithium cobaltate small intermediate particles and the lithium cobaltate small intermediate particles, are mixed based on a preset ratio. The mixture is sintered and milled to form the anode material.

The nano-scale additive including the M element includes one or more compounds, and the one or more compounds include at least one of oxide, fluoride, and carbonic acid compound. When the M element is Al, the M element has a concentration of 500 ppm to 12000 ppm.

When the M element includes Al and at least one of Mg, Ti, Zr, Mn, and Ni, Al has a concentration of 500 ppm to 12000 ppm, and the M element has a total concentration of 1000 ppm to 30000 ppm.

The nano-scale additive including the A element includes at least one of oxide, fluoride, and carbonic acid compound. When the A element is F, the A element has a concentration of 200 ppm to 2000 ppm. When the A element includes F and at least one of B, P, and N, F has a concentration of 200 ppm to 2000 ppm, and the A element has a total concentration of 200 ppm to 4000 ppm.

The secondary mixture is sintered at a temperature from 600 degrees Celsius to 1100 degrees Celsius, for a time period H₃ from 5 hours to 20 hours.

The present disclosure further provides a lithium-ion battery. The lithium-ion battery includes an electrode plate. The electrode plate includes the anode material, a binding agent, and an electrical conductive agent. The lithium-ion battery has a capacity retention ratio greater than 80% after 50 cycles under a voltage of 4.6V.

The anode material has an excellent electrochemical performance, including a high limited charge voltage of 4.45V. The lithium-ion battery 200 has a high initial discharge capacity of 193 mAh/g, and a capacity retention ratio greater than 90% after 50 cycles under a high voltage.

The present disclosure will be explained below by the embodiments. Those skilled in the art should understand that the following embodiments are merely illustrative but not to be considered as limiting the scope of the present disclosure. Unless otherwise specified, the reagents, the software, or the instruments that are not specifically addressed in the following embodiments are commercial products or open source.

In the description of the present disclosure, the terms "one embodiment", "some embodiments", "example", "one example", or "some examples" mean a specific feature, structure, material, or characteristic described in the embodiment or example. In the description, the above terms do not necessarily represent the same embodiment or example. Furthermore, the particular features, structures, materials, or characteristics described may be combined in a suitable manner in any one or more embodiments or examples.

### Embodiment 1

Making lithium cobaltate large intermediate particles (A): cobaltosic oxide doped with Al, lithium carbonate, and MgCO₃ were mixed in a ball crusher for 5 hours to form a primary mixture. Li and Co were in a mole ratio of 1.05:1. Mg had a content of 1200 ppm in the primary mixture. The doping amount of Al in the cobaltosic oxide was about 2000 ppm. The cobalt salt particles had a medium diameter of 13 microns to 16 microns. The primary mixture was then loaded to a pushed slab kiln for sintering the primary mixture. The pushed slab kiln was heated to 870 degrees Celsius with a heating rate of 3 degrees Celsius per minute, and maintained at that temperature for 3.5 hours. The pushed slab kiln was then heated to 1050 degrees Celsius at same heating rate, and maintained at that temperature for 6 hours. The primary sintered particles were crushed and separated to obtain the lithium cobaltate large intermediate particles (A), which had a medium diameter of 19 microns.

Making lithium cobaltate small intermediate particles (C): cobaltosic oxide doped with Mg, lithium carbonate, and TiO₂ were mixed in a ball crusher for 5 hours to form a primary mixture. Li and Co were in a mole ratio of 1.03:1. Ti had a content of 500 ppm in the second primary mixture. The doping amount of Al in the cobaltosic oxide was about 3000 ppm. The cobalt salt particles had particle sizes of 13 microns to 16 microns. The primary mixture was then loaded to a pushed slab kiln for sintering. The pushed slab kiln was heated to 860 degrees Celsius with a heating rate of 3 degrees Celsius per minute, and maintained at that temperature for 3.5 hours. The pushed slab kiln was then heated to 950 degrees Celsius at same heating rate, and maintained at that temperature for 6 hours. The primary sintered particles were crushed and separated to obtain the lithium cobaltate small intermediate particles (C), which had a medium diameter of 4 microns.

Making lithium cobaltate anode material: the particles A and C, in a ratio of 8:2 by weight, were mixed in the ball crusher. Al₂O₃, TiO₂, and LiF were further added to the ball crusher and mixed for 3 hours to form secondary mixture. Al had a content of 1000 ppm in the secondary mixture. Ti had a content of 700 ppm in the secondary mixture. F had a content of 800 ppm in the secondary mixture.

The secondary mixture was then loaded to the pushed slab kiln for sintering. The pushed slab kiln was heated to 850 degrees Celsius at a heating rate of 5 degrees Celsius per minute, and maintained at the temperature for 6 hours. The secondary sintered particles were cooled and milled to form the lithium cobaltate anode material coated by positive ions and negative ions.

The lithium cobaltate anode material has a formula of Li_{1.046}Mg_{0.0063}Al_{0.0094}Ti_{0.0016}CoO₂F0.0031.

### Embodiment 2

Making lithium cobaltate large intermediate particles (B): cobaltosic oxide, lithium carbonate, MgCO₃, and ZrO₂ were mixed in a ball crusher for 5 hours to form a primary mixture. Li and Co were in a mole ratio of 1.05:1. Mg had a content of 2200 ppm in the primary mixture. Mg had a content of 500 ppm in the primary mixture. The cobaltosic oxide was not doped with elements other than Co and O. The cobalt salt particles had a medium diameter of 13 microns to 16 microns. The primary mixture was then loaded to a pushed slab kiln for sintering the primary mixture. The pushed slab kiln was heated to 870 degrees Celsius at a heating rate of 3 degrees Celsius per minute, and maintained at the temperature for 3.5 hours. The pushed slab kiln was then heated to 1050 degrees Celsius at the heating rate, and maintained at the temperature for 6 hours. The primary sintered particles were crushed and separated to obtain the lithium cobaltate large intermediate particles (B), which had a medium diameter of 19 microns.

The lithium cobaltate small intermediate particles (C) were prepared by the same step in Embodiment 1.

The particles B and C, in a ratio of 8:2 by weight, were mixed in the ball crusher. Al₂O₃, TiO₂, and LiF were further added to the ball crusher and mixed for 3 hours to form secondary mixture. Al had a content of 1000 ppm in the secondary mixture. Ti had a content of 700 ppm in the secondary mixture. F had a content of 800 ppm in the secondary mixture.

The other steps are the same as in Embodiment 1. The lithium cobaltate anode material had a formula of Li_{1.046}Mg_{0.0095}Al_{0.0036}Ti_{0.0016}Zr_{0.0004}CoO₂F_{0.0031}.

### Embodiment 3

The lithium cobaltate large intermediate particles (A) were prepared by the same step as in Embodiment 1.

The particles A, Al₂O₃, TiO₂, and LiF were added to the ball crusher and mixed for 3 hours to form secondary mixture. Al had a content of 1000 ppm in the secondary mixture. Ti had a content of 700 ppm in the secondary mixture. F had a content of 800 ppm in the secondary mixture.

The other steps are the same as in Embodiment 1. The lithium cobaltate anode material had a formula of Li_{1.05}Mg_{0.0048}Al_{0.0109}Ti_{0.0014}CoO₂F_{0.0031}.

### Embodiment 4

The lithium cobaltate small intermediate particles (C) were prepared by the same step as in Embodiment 1.

The particles C, Al₂O₃, TiO₂, and LiF were added to the ball crusher and mixed for 3 hours to form secondary mixture. Al had a content of 1000 ppm in the secondary mixture. Ti had a content of 700 ppm in the secondary mixture. F had a content of 800 ppm in the secondary mixture.

The other steps are the same as in Embodiment 1. The lithium cobaltate anode material had a formula of Li_{1.03}Mg_{0.0121}Al_{0.0036}Ti_{0.0025}CoO₂F_{0.0031}.

### Comparative Embodiment 1

Differences between the COMPARATIVE EMBODIMENT 1 and the Embodiment 1 are the steps for coating, as follows.

The lithium cobaltate large intermediate particles (A) and the lithium cobaltate small intermediate particles (C) were prepared by the same step as in Embodiment 1.

The particles A and C, in a ratio of 8:2 by weight, were mixed in the ball crusher. Al₂O₃ and TiO₂ were further added to the ball crusher and mixed for 3 hours to form secondary mixture. Al had a content of 1000 ppm in the secondary mixture. Ti had a content of 700 ppm in the secondary mixture. F had a content of 800 ppm in the secondary mixture.

The other steps are the same as in Embodiment 1. The lithium cobaltate anode material had a formula of Li_{1.046}Mg_{0.0063}Al_{0.0036}Ti_{0.0014}CoO₂.

### Comparative Embodiment 2

Differences between the Comparative Embodiment 2 and the Embodiment 2 are the steps for coating, as follows.

The lithium cobaltate large intermediate particles (B) and the lithium cobaltate small intermediate particles (C) were prepared by the same step as in Embodiment 2.

The particles B and C, in a ratio of 8:2 by weight, were mixed in the ball crusher. Al₂O₃ and TiO₂ were further added to the ball crusher and mixed for 3 hours to form secondary mixture. Al had a content of 1000 ppm in the secondary mixture. Ti had a content of 700 ppm in the secondary mixture. F had a content of 800 ppm in the secondary mixture.

The other steps are the same as in Embodiment 2. The lithium cobaltate anode material had a formula of Li_{1.046}Mg_{0.0095}Al_{0.0036}Ti_{0.0016}Zr_{0.0004}CoO₂.

### Comparative Embodiment 3

Differences between the Comparative Embodiment 3 and the Embodiment 1 are the steps for coating, as follows.

The lithium cobaltate large intermediate particles (A) and the lithium cobaltate small intermediate particles (C) were prepared by the same step as in Embodiment 1.

The particles A and C, in a ratio of 8:2 by weight, were mixed in the ball crusher. TiO₂ and LiF were further added to the ball crusher and mixed for 3 hours to form secondary mixture. Ti had a content of 700 ppm in the secondary mixture. F had a content of 800 ppm in the secondary mixture.

The other steps are the same as in Embodiment 1. The lithium cobaltate anode material had a formula of Li_{1.046}Mg_{0.0063}Al_{0.0016}Ti_{0.0016}CoO₂F_{0.0031}.

### Comparative Embodiment 4

Differences between the Comparative Embodiment 4 and the Embodiment 2 are the steps for coating, as follows.

The lithium cobaltate large intermediate particles (B) and the lithium cobaltate small intermediate particles (C) were prepared by the same step as in Embodiment 2.

The particles B and C, in a ratio of 8:2 by weight, were mixed in the ball crusher. TiO₂ and LiF were further added to the ball crusher and mixed for 3 hours to form secondary mixture. Ti had a content of 700 ppm in the secondary mixture. F had a content of 800 ppm in the secondary mixture.

The other steps are the same as in Embodiment 2. The lithium cobaltate anode material had a formula of Li_{1.046}Mg_{0.0095}Ti_{0.0016}Zr_{0.0004}CoO₂F_{0.0031}.

The contents of elements were tested by inductively coupled plasma (ICP) method and titration method. The contents are shown in Table 1.

**Table 1 contents of doping elements of the anode material**

| | **Content /ppm** | | | | |
|---|---|---|---|---|---|
| | Mg | Al | Ti | Zr | F |
| Embodiment 1 | 1600±200 | 2800±300 | 750±100 | / | 500±200 |
| Embodiment 2 | 2400±200 | 1000±300 | 750±100 | 300±100 | 500±200 |
| Embodiment 3 | 1200±200 | 3000±300 | 650±100 | / | 500±200 |
| Embodiment 4 | 3000±200 | 1000±100 | 1200±100 | / | 500±200 |
| Comparative Embodiment 1 | 1600±200 | 2800±300 | 750±100 | / | / |
| Comparative Embodiment 2 | 2400±200 | 1000±300 | 750±100 | 300±100 | / |
| Comparative Embodiment 3 | 1600±200 | 900±200 | 750±100 | / | 500±200 |
| Comparative Embodiment 4 | 2400±200 | / | 750±100 | 300±100 | 500±200 |

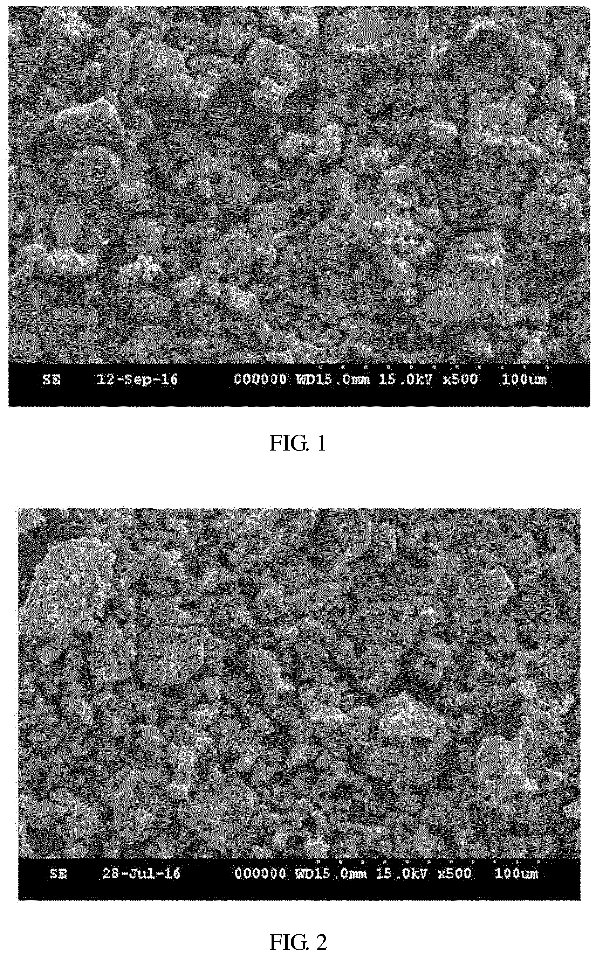

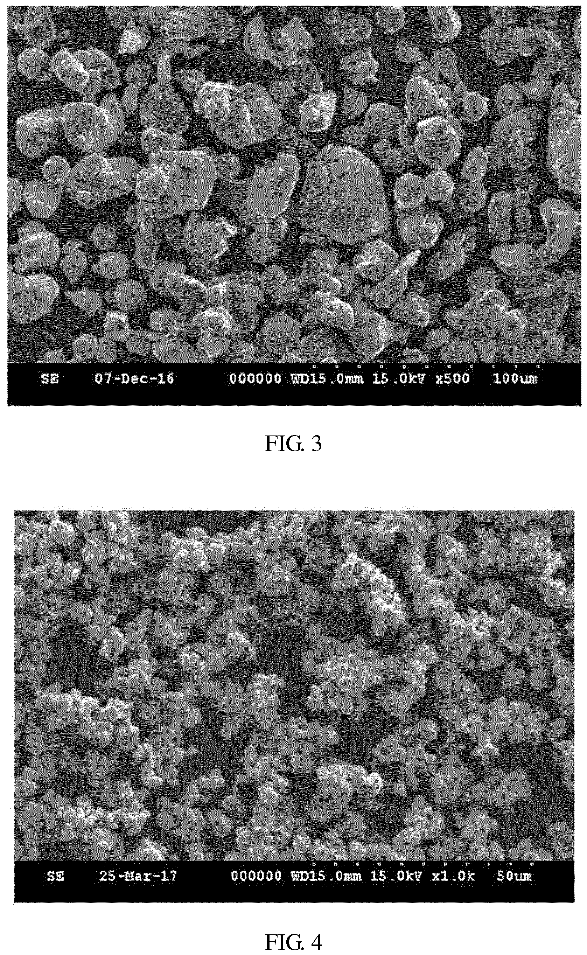

Referring to FIGS. 1 to 4, the SEM images show that the particles of the anode material prepared by Embodiments 1 to 4 include primary particles and secondary particles formed by the primary particles.

The lithium cobaltate anode material prepared by Embodiment 3 and Comparative Embodiments 3 and 4 were cut by argon ion and analyzed by Electron probe micro-analyzer (EPMA) at the cross-sectional area.

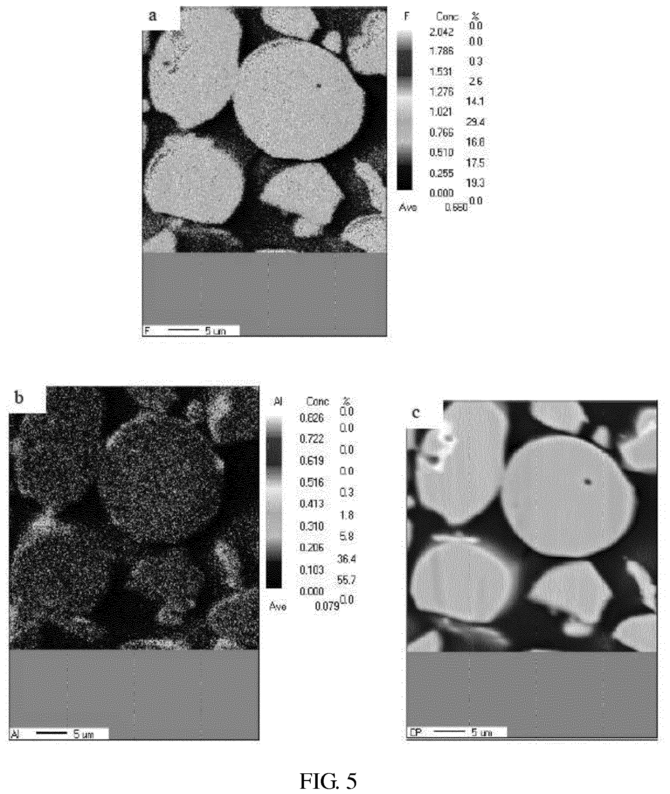

Referring to FIG. 5, Al and F are enriched in the outer area of the particles of the lithium cobaltate anode material prepared by Embodiment 3, to form a clear and uniform coating layer).

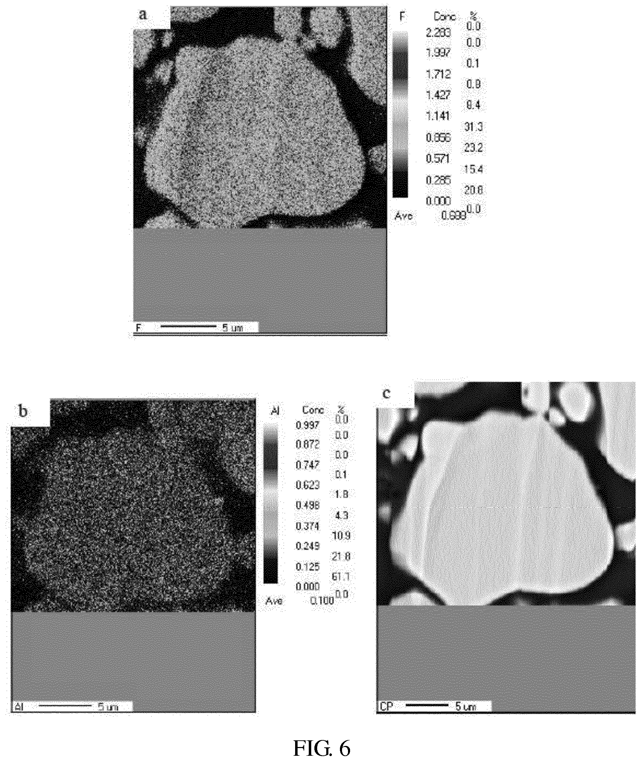

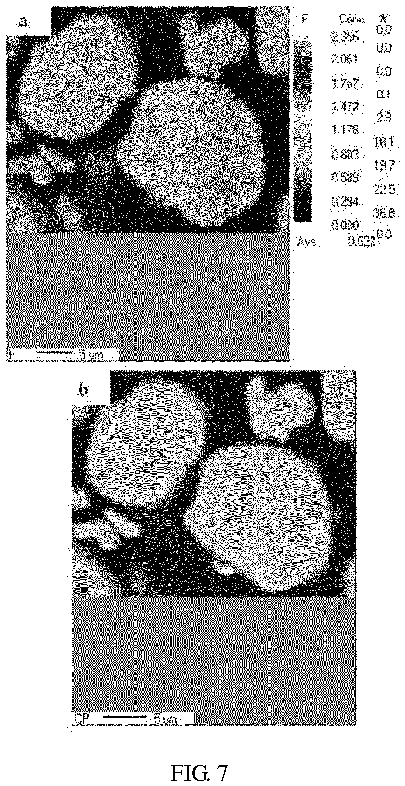

Referring to FIGS. 6 and 7, although F is evenly distributed, the outer areas of the lithium cobaltate anode material prepared by Comparative Embodiments 3 and 4 were not enriched by F in the absence of Al.

### Embodiment 5

Each of the lithium cobaltate anode materials prepared by Embodiments 1-4 and Comparative Embodiments 1-4, together with the binding agent and the electrical conductive agent, were used to manufacture an electrode plate. The lithium cobaltate anode material, the binding agent, and the electrical conductive agent were in a ratio of 90:6:4 by weight. Each electrode plate, an isolation membrane, a lithium plate, and an electrolyte were assembled, in an argon-filled glove box, to form a button cell.

The cycling performance of each button cell was tested by Shenzhen Xinwei charge discharge test system, at a charge and discharge voltage being 3.0 V-4.5 V and rate performance being 0.1C/0.1C.

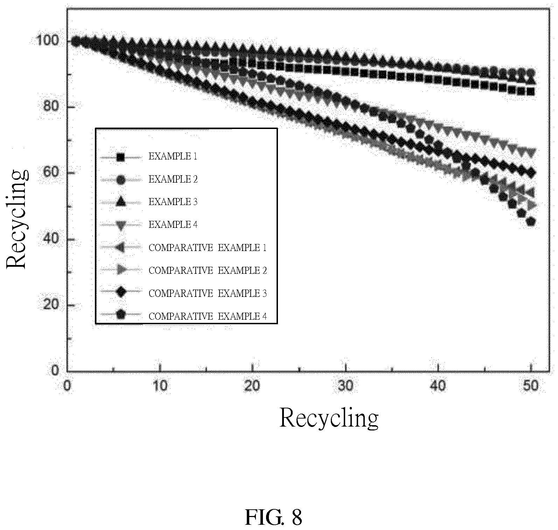

The cycling performance of each button cell was also tested at the charge and discharge voltage being 3.0 V-4.6 V and rate performance being 1C/1C. The results are in Table 2 and FIG. 8.

**Table 2 Electrochemical performance**

| | Lithium cobaltate intermediate particles | **Content (ppm)** | | | Initial charge capacity mAh/g (3.0-4.5V 0.1C/0.1C) | Initial discharge capacity mAh/g (4.5V-3.0V 0.1C/0.1C) | Initial efficienc y % | Capacity retention ratio% (3.0V-4.6V 1.0C/1.0C) after 50 cycles |
|---|---|---|---|---|---|---|---|---|
| | | Al | Ti | F | | | | |
| Embodiment 1 | A80%+C20% | 1000 | 700 | 800 | 198.15 | 191.06 | 96.42 | 84.65 |
| Embodiment 2 | B80%+C20% | 1000 | 700 | 800 | 199.30 | 193.06 | 96.87 | 90.36 |
| Embodiment 3 | A100% | 1000 | 700 | 800 | 198.07 | 189.62 | 95.73 | 87.88 |
| Embodiment 4 | C100% | 1000 | 700 | 800 | 198.34 | 192.87 | 97.24 | 66.32 |
| Comparative Embodiment 1 | A80%+C20% | 1000 | 700 | / | 196.21 | 188.58 | 96.11 | 54.08 |
| Comparative Embodiment 2 | B80%+C20% | 1000 | 700 | / | 199.49 | 192.62 | 96.56 | 50.33 |
| Comparative Embodiment 3 | A80%+C20% | / | 700 | 800 | 199.55 | 190.51 | 95.47 | 60.11 |
| Comparative Embodiment4 | B80%+C20% | / | 700 | 800 | 197.55 | 192.04 | 97.21 | 45.34 |

In the description of the present disclosure, the terms "one embodiment", "some embodiments", "example", "one example", or "some examples" mean a specific feature, structure, material, or characteristic described in the embodiment or example. In the description, the above terms do not necessarily represent the same embodiment or example. Furthermore, the particular features, structures, materials, or characteristics described may be combined in a suitable manner in any one or more embodiments or examples.

The embodiments shown and described above are only examples. Therefore, many commonly-known features and details are neither shown nor described. Even though numerous characteristics and advantages of the present technology have been set forth in the foregoing description, together with details of the structure and function of the present disclosure, the disclosure is illustrative only, and changes may be made in the detail, including in matters of shape, size, and arrangement of the parts within the principles of the present disclosure, up to and including the full extent established by the broad general meaning of the terms used in the claims. It will, therefore, be appreciated that the embodiments described above may be modified within the scope of the claims.

## Claims

1. An anode material adapted for a lithium-ion battery, comprising:
particles each comprising a dense layer, an inner layer, and a particle core;
wherein the dense layer is evenly enriched with an M element and an A element, the inner layer comprises the M element and the A element, concentrations of the M element and the A element progressively decreasing in the inner layer along a direction from the dense layer to the particle core, the particle core comprises the M element and the A element, concentrations of the M element and the A element being greater than zero and evenly distributed in the particle core, the M element comprises one or more metallic elements having doping and coating functions, the A element comprises one or more nonmetallic elements having doping and coating functions, the M element comprises Al, or Al and at least one of Mg, Ti, Zr, Mn, and Ni, and the A element comprises F, or F and at least one of B, P, and N.

2. The anode material of claim 1, wherein the anode material has a general formula of Li_{1+z}Co₁₋ₓMxOₘAₙ. Wherein, 0<z≤0.05, 0<x≤0.03, 1.9≤m+n≤2.1, m and n are not zero.

3. The anode material of claim 1, wherein particle sizes of the particles of the anode material are uniform or non-uniform, when the particles has non-uniform particle sizes, a concentration of the M element in the dense layer of small particles is higher than that in the dense layer of large particles.

4. The anode material of claim 3, wherein the small particles have a medium diameter of 2 microns to 8 microns, and the large particles have a medium diameter of 13 microns to 22 microns.

5. The anode material of claim 1, wherein when the M element is Al, the M element has a concentration of 500 ppm to 12000 ppm; when the A element is F, the A element has a concentration of 200 ppm to 2000 ppm.

6. The anode material of claim 1, wherein when the M element comprises Al and other element(s), Al has a concentration of 500 ppm to 12000 ppm, and the M element has a total concentration of 1000 ppm to 30000 ppm; when the A element comprises F and other element(s), F has a concentration of 200 ppm to 2000 ppm, and the A element has a total concentration of 200 ppm to 4000 ppm.

7. An anode material adapted for a lithium-ion battery, comprising:
particles each having a dense layer, an inner layer, and a particle core;
wherein the dense layer ranges from an outer surface of the particle to the inner layer, the dense layer is evenly enriched with an M element and an A element, concentrations of the M element and the A element being progressively decreasing from the outer surface of the particle to the particle core, the particle core comprises the M element and the A element, concentrations of the M element and the A element being greater than zero and being evenly distributed in the particle core, the M element comprises one or more metallic elements having doping and coating functions, the A element comprises one or more nonmetallic elements having doping and coating functions, the plurality of particles of the anode material have a uniform particle size or non-uniform particle sizes, when the plurality of particles have non-uniform particle sizes, a concentration of the M element in the dense layer of small particles is higher than that in the dense layer of the large particles;
the M element comprises Al, or Al and at least one of Mg, Ti, Zr, Mn, and Ni; and
the A element comprises F, or F and at least one of B, P, and N.

8. The anode material of claim 7, wherein the anode material has a general formula of Li_{1+z}Co₁₋ₓMxOₘAₙ. Wherein, 0<z≤0.05, 0<x≤0.03, 1.9≤m+n≤2.1, m and n are not zero.

9. The anode material of claim 7, wherein the small particles have a medium diameter of 2 microns to 8 microns, and the large particles have a medium diameter of 13 microns to 22 microns.

10. The anode material of claim 7, wherein the large particles and the small particles are in a ratio between 7:3 and 9:1 by weight.

11. The anode material of claim 7, wherein when the M element is Al, the M element has a concentration of 500 ppm to 12000 ppm; when the A element is F, the A element has a concentration of 200 ppm to 2000 ppm.

12. The anode material of claim 7, wherein when the M element comprises Al and other element(s), Al has a concentration of 500 ppm to 12000 ppm, and the M element has a total concentration of 1000 ppm to 30000 ppm; when the A element comprises F and other element(s), F has a concentration of 200 ppm to 2000 ppm, and the A element has a total concentration of 200 ppm to 4000 ppm.

13. A method for making an anode material for a lithium-ion battery of claim 1 or 7, comprising:
primary mixing: mixing a cobalt salt undoped or doped with an M' element and a lithium compound to form a primary mixture, or further adding a nano-scale additive comprising an M" element into the primary mixture, a mole ratio between the lithium element and the cobalt element in the primary mixture being between 1 and 1.06, the cobalt salt having a medium diameter of 13 microns to 16 microns, the M' element comprising Al, or Al and at least one of Mg, Ti, Zr, Mn, and Ni, the M' element comprising Al, or Al and at least one of Mg, Ti, Zr, Mn, and Ni.;
primary sintering: forming primary sintered particles by sintering the primary mixture, the sintering comprises heating the primary mixture to a temperature ranging from 700 degrees Celsius to 900 degrees Celsius, and sintering the primary mixture at the temperature for a first time period H₁, and further comprising heating the primary mixture to a temperature ranging from 900 degrees Celsius to 1100 degrees Celsius, and sintering the primary mixture at the temperature for a second time period H₂, a sum of H₁ and H₂ being 8 hours to 20 hours;
crushing and separating: crushing and separating the primary sintered particles into intermediate particles having non-uniform particle sizes;
secondary mixing: mixing the intermediate particles having non-uniform particle sizes, a nano-scale additive comprising an M element, and a nano-scale additive comprising an A element to form a secondary mixture, wherein the M element comprises Al, or Al and at least one of Mg, Ti, Zr, Mn, and Ni, the M' element and the M" element comprised in the M element; the A element comprises F, or F and at least one of B, P, and N;
secondary sintering: forming secondary sintered particles by sintering the secondary mixture at a temperature from 600 degrees Celsius to 1100 degrees Celsius for a time period H₃ from 5 hours to 20 hours; and
milling: cooling and milling the secondary sintered particles to form the anode material.

14. The method of claim 13, wherein the intermediate particles having non-uniform particle sizes comprise large intermediate particles and small intermediate particles, the small intermediate particles have a medium diameter of 2 microns to 8 microns.

15. The method of claim 13, wherein the large intermediate particles and the small intermediate particles are in a ratio between 7:3 and 9:1 by weight.

16. The method of claim 13, wherein during the secondary mixing, the nano-scale additive including the A element comprises LiF, AlF₃, and MgF₂.

17. A lithium-ion battery comprising:
an electrode plate comprising the anode material of claim 1 or 7, a binding agent, and an electrical conductive agent;
a lithium plate; and
an electrolyte;
wherein the lithium-ion battery has a capacity retention ratio greater than 80% after 50 cycles under a voltage of 4.6 V.
